(19) Europäisches Patentamt
European Patent Office
Office européen des brevets

(11) **EP 3 039 611 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **14757844.7**

(22) Anmeldetag: **25.08.2014**

(51) Internationale Patentklassifikation (IPC):
*G06K 7/00* (2006.01)     *G06Q 20/32* (2012.01)
*G06Q 20/34* (2012.01)     *H04L 29/06* (2006.01)

(52) Gemeinsame Patentklassifikation (CPC):
**G06Q 20/352; H04L 63/0492; H04L 63/067; H04L 63/0853; H04W 4/80**

(86) Internationale Anmeldenummer:
**PCT/EP2014/002323**

(87) Internationale Veröffentlichungsnummer:
**WO 2015/028142 (05.03.2015 Gazette 2015/09)**

(54) **VERFAHREN UND VORRICHTUNG ZUR ÜBERTRAGUNG EINER INFORMATION**

PROCEDURE AND DEVICE FOR TRANSFERING AN INFORMATION

PROCEDURE ET DISPOSITIF POUR TRANSFERER UNE INFORMATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.08.2013   DE 102013014187**

(43) Veröffentlichungstag der Anmeldung:
**06.07.2016   Patentblatt 2016/27**

(73) Patentinhaber: **Giesecke+Devrient Mobile Security GmbH**
**81677 München (DE)**

(72) Erfinder: **DAHMOUNI, Youssef**
**81929 München (DE)**

(74) Vertreter: **Giesecke + Devrient IP**
**Prinzregentenstraße 159**
**81677 München (DE)**

(56) Entgegenhaltungen:
**US-A1- 2004 223 481     US-A1- 2007 052 525**
**US-A1- 2011 084 796**

**Beschreibung**

Die Erfindung ist in den unabhängigen Ansprüchen 1 und 14 definiert.

Die Erfindung betrifft ein Verfahren, insbesondere zur Datenkommunikation, in einem System, umfassend ein erstes und ein zweites Sicherheitsmodul. Eine Antikollisionsphase umfasst eine Folge von Antikollisionsabfragen, wobei auf die Antikollisionsphase eine Kommunikationsphase folgt.

Durch die Weiterentwicklung von Sicherheitsmodulen in Form von Chipkarten und den Einsatz von RFID (Radio-Frequency Identifikation) ist die Verwendung von Chipkarten zur kontaktlosen Datenübertragung gestiegen. Dabei werden insbesondere kontaktlose Chipkarten für unterschiedliche Anwendungen eingesetzt, beispielsweise zur Authentifizierung, bei der Freigabe von Transaktionen oder der Steuerung von Zutrittsberechtigungen. Trotz der derzeit noch geringen Reichweite von RFID kommt es häufig vor, dass im Leserfeld eines Kartenlesers mehrere Chipkarten vorhanden sind. Um eine Kommunikation mit der "richtigen" Chipkarte zu beginnen, muss der Kartenleser die im Leserfeld befindlichen Chipkarten identifizieren. Grundsätzlich ist ein Kartenleser (Kommunikationsgerät) nur zur Kommunikation mit einer Chipkarte vorgesehen. Sofern wenigstens eine Chipkarte vom Kommunikationsgerät erkannt wird, führt dieses das Antikollisionsverfahren aus. Dabei sendet das Kommunikationsgerät eine Initialabfrage mit einer Aufforderung an alle im Wirkkreis (Leserfeld) des Kommunikationsgeräts befindlichen Chipkarten zu deren Identifikation. Werden vom Kommunikationsgerät mehrere gleiche Identifikationsmerkmale empfangen, führt das Kommunikationsgerät ein Separierverfahren durch. Das Separierverfahren beinhaltet in der Regel eine zweite (und/ oder weitere), detailliertere Abfrage. Gegebenenfalls kann das Kommunikationsgerät aus den Antworten auf die Abfragen die Chipkarte oder mehrere Chipkarten identifizieren. Somit umfasst das Antikollisionsverfahren zumindest eine Initialabfrage und gegebenenfalls ein Separierverfahren. Die Identifikation und möglicherweise Selektion einer Chipkarte ist zum Abschließen des Separierverfahrens nicht notwendig.

Eine Kommunikation des Kartenlesers mit zwei Chipkarten ist somit nicht gleichzeitig sondern lediglich abwechselnd möglich. Mittels Verstärker kann die Reichweite von RFID-Systemen erhöht werden. Ein Benutzer muss somit nicht mehr Bewusst eine Chipkarte, beispielsweise eine Bezahlkarte, in das Leserfeld des Kartenlesers bringen. Somit ist es einem Angreifer möglich, die Kommunikation zwischen Bezahlkarte und Kartenleser mitzuhören. Weiterhin könnte ein Angreifer selbst eine Kommunikation mit der Bezahlkarte beginnen und Transaktionen vornehmen.

Dementsprechend besteht ein Interesse, kontaktlose Chipkarten vor einer ungewollten Kommunikation zu schützen. Dazu wurde bereits vorgeschlagen, eine zweite Chipkarte als sogenanntes Blockertag (Blockierkarte) einzusetzen, um ein Identifizieren der Zahlkarte durch den Kartenleser bereits zu Beginn zu verhindern. Dazu nimmt das Blockertag gezielt am Antikollisionsverfahren teil und stört es. Dies bedeutet, dass das Blockertag beispielsweise auf jede Abfrage eines Kartenlesers und somit gleichzeitig und gleichwertig mit der Bezahlkarte antwortet, so dass eine Kollision vom Terminal erkannt wird. Dazu weist das Blockertag ein Identifikationsmerkmal auf, das das Identifikationsmerkmal der Bezahlkarte umfasst. Eine Trennung und somit Identifikation der im Wirkkreis des Kartenlesers befindlichen Chipkarten im Rahmen einer Antikollisionsphase wird somit verhindert, solange das Blockertag im Wirkkreis des Terminals verbleibt.

Sobald ein Angreifer jedoch erkannt hat, dass eine Blockierkarte zum Schutz der Bezahlkarte verwendet wird, könnte er versuchen, diesen Schutz zu umgehen. Beispielsweise könnte er versuchen, mit seinem Lesegerät mittels einer anderen Methode, auf die Bezahlkarte zuzugreifen.

Aus der US 2004/0223481 A1 ist das beschriebene Antikollisionsverfahren bekannt, welches Blockertags einsetzt.

Die Erfindung hat somit die Aufgabe, eine Möglichkeit aufzuzeigen, mit der die Probleme des Standes der Technik gelöst sind und die Sicherheit von Sicherheitsmodulen erhöht werden kann.

Diese Aufgaben werden durch ein Verfahren gemäß Anspruch 1, einem ersten Sicherheitsmodul gemäß Anspruch 15 und einem zweiten Sicherheitsmodul gemäß Anspruch 18 gelöst. Vorteilhafte Ausgestaltungen ergeben sich aus den Unteransprüchen.

Das Verfahren betrifft ein System, das ein erstes und ein zweites Sicherheitsmodul umfasst. Weiterhin umfasst eine Antikollisionsphase eine Folge von Antikollisionsabfragen, wobei auf die Antikollisionsphase eine Kommunikationsphase folgt. Erfindungsgemäß ist vorgesehen, dass das erste Sicherheitsmodul eine zu übertragende Information in der Antikollisionsphase zu dem zweiten Sicherheitsmodul durch Senden von Antworten des ersten Sicherheitsmoduls auf die Folge von Antikollisionsabfragen überträgt. Dabei ist die zu übertragende Information in den Antworten des ersten Sicherheitsmoduls kodiert enthalten. Weiterhin dekodiert das zweite Sicherheitsmodul die zu übertragende Information aus der Folge der Antikollisionsabfragen.

Grundsätzlich kann das Sicherheitsmodul ein tragbarer Datenträger sein, wie beispielsweise eine Chipkarte, eine sichere Massenspeicherkarte oder ein Sicherheitsmodul sein, wie beispielsweise ein Trusted Platform Modul (TPM), ein Nahbereichskommunikations- (NFC-)Modul, ein M2M-Modul, ein Benutzer-Identifikations-Modul oder ein Decoder-Modul. Das Sicherheitsmodul ist ein Hardwaresicherheitsmodul. Diese Optionen gelten unabhängig voneinander für das erste und/ oder das zweite Sicherheitsmodul. Beispielsweise kann das zweite Sicherheitsmodul ein tragbarer Datenträger und das erste Sicherheitsmodul ein fest integriertes Sicherheitsmodul sein.

Das erfindungsgemäße Verfahren verwendet das zweite Sicherheitsmodul als reguläres Sicherheitsmodul, beispielsweise eine Zahlkarte. Das erste Sicherheitsmodul dient zur Sicherheit. Es sendet eine Information an das zweite Sicherheitsmodul, um dem zweiten Sicherheitsmodul eine oder mehrere Funktionen zu ermöglichen. Bei der Information kann es sich beispielsweise um einen Freigabecode, einen Funktionscode und/ oder andere persönliche Informationen, insbesondere eine Personalnummer, Kundennummer, Kontonummer, biometrische Information und/ oder Adressen, handeln. Die Information kann auch nur eine Teilinformation sein, die mit einer anderen Teilinformation im zweiten Sicherheitsmodul zusammengesetzt wird. Das erste Sicherheitsmodul nutzt zur Informationsübertragung vom ersten Sicherheitsmodul auf das zweite Sicherheitsmodul die Antikollisionsphase. Dies bedeutet, dass grundsätzlich die Kommunikation und der Datenaustausch eines Kommunikationsgeräts mit dem zweiten Sicherheitsmodul, beispielsweise der Zahlkarte, durch das erste Sicherheitsmodul nicht verhindert und/ oder das zweite Sicherheitsmodul gesperrt wird. Vorzugsweise ist erst jedoch nach erfolgreichem Austausch, beispielsweise eines bestimmten Freigabecodes, die Zahlkarte für beispielsweise eine bestimmte Transaktion oder ein bestimmtes Kontingent freigegeben. Da die zu übertragene Information, in den Antworten des ersten Sicherheitsmoduls kodiert wird, ist es grundsätzlich einem Angreifer schwierig, die Information aus den Antworten des ersten Sicherheitsmoduls auszulesen. Dies wird zusätzlich erschwert, da die Information nicht in einem einzigen Durchgang vom ersten Sicherheitsmodul auf das zweite Sicherheitsmodul übermittelt wird, sondern das zweite Sicherheitsmodul die zu übertragende Information erst aus der Folge der Antikollisionsabfragen dekodiert. Somit sind die Sicherheit und gleichzeitig der Bedienkomfort des zweiten Sicherheitsmoduls gegenüber herkömmlichen Systemen erhöht.

Das Kommunikationsgerät dient zur Kommunikation mit dem Sicherheitsmodul und kann ein Kartenleser insbesondere als mobile Einheit beispielsweise an einem Kassensystem, als festinstalliertes Gerät, insbesondere zur Zugangskontrolle, oder als integriertes System in einem Notebook, Handy, Computer oder Tastatur vorgehalten sein.

Da sich entsprechend dem Verfahren wenigstens das erste und zweite Sicherheitsmodul in einem Wirkfeld eines elektromagnetischen Feldes eines Kartenlesers befinden, findet aufgrund des üblichen Verhaltens des Kartenlesers ein Kollisionsverfahren statt. Die Antworten des ersten Sicherheitsmoduls sind derart formuliert, dass sie die Antikollisionsabfragen beeinflussen. Dazu bestimmt das erste Sicherheitsmodul deterministisch das Antikollisionsverhalten, so dass das erste Sicherheitsmodul durch die eine Antwort auf eine Abfrage in der Antikollisionsphase den Inhalt einer nachfolgenden Abfrage in der Antikollisionsphase bestimmt. Die zu übertragende Information kann somit über die Antworten des ersten Sicherheitsmoduls und dadurch über die Folge von Kollisionsabfragen an das zweite Sicherheitsmodul übertragen werden.

Mit dem erfindungsgemäßen Verfahren kann so eine Information vom ersten Sicherheitsmodul auf das zweite Sicherheitsmodul übertragen werden, ohne Parameter und/ oder die Architektur am Umfeld des ersten und zweiten Sicherheitsmoduls, beispielsweise an einem Kommunikationsgerät, sowie den damit verbundenen Gerätschaften zu verändern. Auch der Aufbau des ersten und zweiten Sicherheitsmoduls bedarf keiner konstruktiven Änderung. Somit wäre ein Implementieren und Anwenden in bestehenden Anlagen jederzeit ohne technischen und finanziellen Aufwand möglich.

Wie schon zu vermuten ist, handelt es sich bei dem zweiten Sicherheitsmodul beispielsweise um eine Zahlkarte. Das erste Sicherheitsmodul kann beispielsweise eine sogenannte Freigabekarte und/ oder PIN-Karte sein. Das erste und zweite Sicherheitsmodul müssen nicht in einer herkömmlichen Kartenform, beispielsweise in der Form ID-1 vorliegen, sondern können jeweils zum Beispiel in einem Gerät eingebracht, vorzugsweise in einem Mobiltelefon, eingebettet oder in einer beliebigen Form beispielsweise einem Ring oder einem Anhänger ausgebildet sein. Grundsätzlich ist es möglich, dass das erste und/ oder zweite Sicherheitsmodul als eingebettetes, fest installiertes Modul oder als austauschbares Modul ausgeführt sein können.

In einer Ausführungsform wird die zu übertragende Information vom ersten Sicherheitsmodul zum zweiten Sicherheitsmodul über das Antikollisionsprotokoll übertragen. Dies bedeutet, dass die zu übertragende Information vom ersten Sicherheitsmodul direkt in die Antwort des ersten Sicherheitsmoduls auf eine Antikollisionsabfrage kodiert wird. Die in der Antwort des ersten Sicherheitsmoduls enthaltene zu übertragende Information ist somit in der nachfolgenden Antikollisionsabfrage enthalten. Je nach Ausgestaltung der Antwort des ersten Sicherheitsmoduls kann die Antwort die Inhalte der Folge von Antikollisionsabfragen derart beeinflussen, dass die auf die Antwort nachfolgende Antikollisionsabfrage einem bestimmten Schema folgt. Dabei werden das Kollisionsverhalten sowie das Antikollisionsverfahren des Kommunikationsgeräts berücksichtigt. Mit dieser Ausgestaltung kann die zu übertragende Information direkt in der Antikollisionsabfrage enthalten sein. Eine zusätzliche Kommunikation vom ersten Sicherheitsmodul muss nicht stattfinden. Weiterhin kann insbesondere bei einem Angriff die zu übertragende Information vom Angreifer nur mit großem Aufwand ermittelt werden. Dazu müssen aber dem Angreifer bereits viele Merkmale des ersten und zweiten Sicherheitsmoduls sowie beispielsweise das Antikollisionsverhalten des Kommunikationsgeräts bekannt sein.

Insbesondere könnte die zu übertragene Information bereits als Antwort auf die Initialabfrage und wenigstens einer weiteren Antikollisionsabfrage, nämlich eine Separierabfrage übertragen werden. Dazu ist bereits zu Beginn beispielsweise eine Autorisierung respektive Freischaltung bestimmter Funktionen des zweiten Sicherheitsmoduls möglich. Daraus lässt sich unter anderem das Verhalten des zweiten Sicherheitsmoduls für eine bestehende Sitzung steuern.

Weiterhin kann vorgesehen sein, dass das zweite Sicherheitsmodul nach dem Empfang der zu übertragenen Information diese abspeichert. Dabei kann die zu übertragende Information, vorzugszweie sukzessiv, als Ganzes gespeichert wird. Das sukzessive Speichern der Information zu einer ganzen Information ergibt sich aus der Folge von Antikollisionsabfragen, die die Information übertragen. Je nach verwendetem Algorithmus zum Dekodieren durch das zweite Sicherheitsmodul kann die übertragene Information aus der Folge zusammengesetzt abgelegt werden. Alternativ können auch nur Abschnitte der übertragenen Information gespeichert, insbesondere bei einer abschnittsweisen Übertragung, gesondert gespeichert werden. Beispielsweise kann die übertragene Information aus mehreren Teilinformationen bestehen. Jede Teilinformation kann unterschiedliche Funktionen im zweiten Sicherheitsmodul bewirken. Auch sind andere Möglichkeiten, beispielsweise das Abspeichern von Inhalten der Antikollisionsabfragen, denkbar.

Weiterhin kann auch vorgesehen sein, dass lediglich ein Flag, d. h. ein 1 Bit Wert, gesetzt wird, wenn die zu übertragene Information einem bestimmten Muster oder Wert entspricht. Vorzugsweise wird das erste Sicherheitsmodul als Sicherheitskarte oder Freigabekarte verwendet, so dass bei Anwesenheit eines bestimmten ersten Sicherheitsmoduls und/ oder einer Gruppe von ersten Sicherheitsmodulen eine oder mehrere Funktionen freigegeben sind. Dabei kann anhand der übertragenen Information vom ersten Sicherheitsmodul auf das zweite Sicherheitsmodul eine Sicherheitsinformation gespeichert werden, die zur Ausführung von Befehlen, einer Kommunikation oder einer Anwendung benötigt wird. So könnte beispielsweise das zweite Sicherheitsmodul eine Bezahlkarte sein, bei der anstatt der Eingabe der PIN durch einen Benutzer auf ein Bedienfeld lediglich das erste Sicherheitsmodul in der Umgebung anwesend sein muss. Die zu übertragende Information wäre schließlich ein Ersatz für die PIN-Eingabe.

Alternativ könnte ein Benutzer auch durch die Anwesenheit des ersten Sicherheitsmoduls dem zweiten Sicherheitsmodul übermitteln, dass bestimmte, vorzugsweise alle Funktionen ausgeführt werden dürfen. Die zu übertragene Information dient der Authentifizierung des ersten Sicherheitsmoduls gegenüber dem zweiten Sicherheitsmodul, worauf das zweite Sicherheitsmodul ggf. nach erfolgreicher Prüfung eine Sicherheitsinformation speichert. Alternativ könnte das zweite Sicherheitsmodul in einem Mobiltelefon eingesetzt sein, so dass mit dem ersten Sicherheitsmodul bestimmte Funktionen des Mobiltelefons, beispielsweise eine elektronische Börse oder Netzdienste freigeschaltet werden.

Weiterhin kann vorgesehen sein, dass die zu übertragende Information einen Freigabecode, vorzugsweise ein Einmalpasswort (OTP; "One Time Passwort"), ist. Dieser Freigabecode kann zum einen lediglich zur Freigabe bestimmter Funktion(en) eingesetzt werden.

In einer Ausführungsform kann vorgesehen sein, dass erst nach erfolgreicher Prüfung des übertragenen Freigabecodes durch das zweite Sicherheitsmodul eine der Antikollisionsphase nachfolgende Kommunikationsphase des zweiten Sicherheitsmoduls begonnen werden kann. Dazu wertet das zweite Sicherheitsmodul die zu übertragende Information, insbesondere den übertragenen Freigabecode, aus und bestimmt, ob das zweite Sicherheitsmodul an der Kommunikationsphase teilnehmen darf. Dazu ist im zweiten Sicherheitsmodul bereits ein Freigabecode hinterlegt oder das zweite Sicherheitsmodul ermittelt aufgrund eines Algorithmus, dass der übertragene Freigabecode akzeptiert wird. Der Freigabecode kann dynamisch oder statisch ausgeprägt sein. Insbesondere, wenn der Freigabecode dynamisch ist, kann vorgesehen sein, dass das zweite Sicherheitsmodul die Richtigkeit über beispielsweise einem mathematischen Modell, insbesondere einer Prüfziffer, bestimmt.

Weiterhin kann vorgesehen sein, dass eine Prüfung stattfindet, dass kein weiteres Sicherheitsmodul die Übertragung der Antworten des ersten Sicherheitsmoduls und zweiten Sicherheitsmoduls sowie der Abfragen des Kommunikationsgeräts stört, beeinflusst und/ oder abhört. Dazu kann beispielsweise das erste Sicherheitsmodul zwei Antikollisionsabfragen, vorzugsweise die Initialabfrage und eine der Initialabfrage nachfolgende Antikollisionsabfrage, benutzen. Bei einem Verfahren ist beispielsweise eine Identifikationsnummer des ersten Sicherheitsmoduls der Identifikationsnummer des zweiten Sicherheitsmoduls angepasst, wobei die Identifikationsnummer des ersten Sicherheitsmoduls gegenüber der Identifikationsnummer des zweiten Sicherheitsmoduls an lediglich einer Bitstelle eine Negierung aufweist. Nach Übertragen der ersten und zweiten Identifikationsnummer auf die Initialabfrage wird somit beim Kommunikationsgerät eine Kollision bewirkt, worauf das Kommunikationsgerät eine weitere Antikollisionsabfrage, nämlich eine Kollisionsabfrage, versendet. Aus der Kollisionsabfrage erkennt das erste Sicherheitsmodul im Vergleich des Kollisionsbits mit der negierten Bitstelle, ob ein weiteres Sicherheitsmodul anwesend ist. Weiterhin kann das erste Sicherheitsmodul aus der Kollisionsabfrage erkennen, ob es sich beim zweiten Sicherheitsmodul tatsächlich um das "richtige" Sicherheitsmodul handelt.

Die Antworten des ersten Sicherheitsmoduls sind in einer Ausführungsform entsprechend der vorausgehenden Abfrage des Kommunikationssystems und zumindest einem kurzfristigen Ziel, insbesondere einer bestimmten inhaltlichen Beeinflussung der nachfolgenden Antikollisionsabfrage, dynamisch ausgebildet. Ein kurzfristiges Ziel könnte das Erzwingen einer bestimmten Abfrage sein. Das erste Sicherheitsmodul beeinflusst somit deterministisch über jede ihrer Antworten auf jede Antikollisionsabfrage die Inhalte der Folge von nachfolgenden Kollisionsabfragen. Dies bedeutet, dass das erste Sicherheitsmodul ihre Antwort auf die Kollisionsabfrage so formuliert, dass die zu übertragene Information in der nächsten Kollisionsabfrage für das zweite Sicherheitsmodul dekodierbar enthalten ist. Dazu kann es vorteilhaft sein, wenn das erste Sicherheitsmodul das Antikollisionsverhalten des Kommunikationsgeräts kennt.

Um das Antikollisionsverhalten des Kommunikationsgeräts bestimmen, könnte das erste Sicherheitsmodul einleitend auf eine Antikollisionsabfrage gezielt ein Blockieren und somit eine Kollision bewirken. Nach einer Analyse von einer oder mehreren nachfolgenden Antikollisionsabfragen kann das erste Sicherheitsmodul das Antikollisionsverhalten bestimmen. Das erste Sicherheitsmodul kann somit entsprechend einem Muster des Antikollionsverhaltens die Antworten auf die Antikollisionsabfragen anpassen. Dem ersten Sicherheitsmodul ist es demnach möglich, mithilfe der Antworten das Verhalten des Kommunikationsgeräts, insbesondere den Inhalt der Antikollisionsabfragen des Kommunikationsgeräts zumindest Bitweise zu steuern. Weiterhin kann eine das erste Sicherheitsmodul eine physikalische Anpassung, insbesondere das Versenden der Antworten in einem bestimmten Frequenzbereich oder in einem bestimmten Zeitintervall, vornehmen.

Bei dem Verfahren gemäß der Erfindung kann vorgesehen sein, dass auf eine erste Antikollisionsabfrage der Folge der Antikollisionsabfragen die Antwort des ersten Sicherheitsmoduls eine erste Antwort ist. Das erste Sicherheitsmodul wertet diese erste Antikollisionsabfrage aus. Entsprechend dem Auswerteergebnis der ersten Antikollisionsabfrage kodiert das erste Sicherheitsmodul die zu übertragende Information mit der ersten Identifikationsnummer des ersten Sicherheitsmoduls zu einer ersten Übertragungsnummer. Die erste Übertragungsnummer wird schließlich in der ersten Antwort eingebunden. Vorzugsweise wird beim Kodieren die zu übertragende Information mit der ersten Identifikationsnummer derart vermengt, dass die zu übertragende Information die Identifikationsnummer von der letzten Stelle her auffüllt.

Das erste Sicherheitsmodul kann aus der Folge von Antikollisionsabfragen eine weitere Antikollisionsabfrage empfangen, diese auswerten und entsprechend dem Auswerteergebnis eine weitere Antwort erstellen. Dabei wird die zu übertragende Information mit der ersten Identifikationsnummer des ersten Sicherheitsmoduls zu einer weiteren Übertragungsnummer kodiert und die weitere Übertragungsnummer in der weiteren Antwort eingebunden. Hier ist jedoch zu beachten, dass die weitere Antikollisionsabfrage einen Kollisionshinweis enthält und die weitere Übertragungsnummer mit Rücksicht auf den Kollisionshinweis erstellt wird. Dabei werden in Bezug auf die erste Identifikationsnummer lediglich die Bitstellen der zu übertragenden Information eingebracht, die der Bitstelle der Kollision folgen. Eine weitere Kollision mit der zweiten Identifikationsnummer des zweiten Sicherheitsmoduls kann nicht mehr an der gleichen Bitstelle, sondern nur noch an einer nachfolgenden Bitstelle stattfinden kann. Diese Schritte können analog wiederholt werden, bis die Information im Gesamten übertragen ist und keine Kollisionsabfrage empfangen wird.

In einer Ausführungsform des Verfahrens kann vorgesehen sein, dass das zweite Sicherheitsmodul auf jede Antikollisionsabfrage der Folge von Antikollisionsabfragen eine reguläre Antwort versendet. Eine reguläre Antwort beschreibt eine Antwort, die aufgrund eines üblichen Verhaltens des zweiten Sicherheitsmoduls ausgesandt werden würde. Üblicherweise umfasst die reguläre Antwort die zweite Identifikationsnummer des zweiten Sicherheitsmoduls. Die erste Antwort des ersten Sicherheitsmoduls bewirkt jeweils mit der regulären Antwort des zweiten Sicherheitsmoduls eine Kollision an einer Kollisionsstelle m. Die Kollisionsabfrage umfasst dabei eine Kollisionsinformation zu einer vorangehenden Kollision.

Wie bereits oben erwähnt, kann das erste Sicherheitsmodul zur Bildung jeder weiteren Übertragungsnummer die vorhergehende Übertragungsnummer anhand des Kollisionshinweises über die Kollisionsstelle m der vorhergehenden Übertragungsnummer der Antikollisionsabfrage anpassen. Vorzugsweise wird die vorhergehende Übertragungsnummer lediglich an der Kollisionsstelle m der vorhergehenden Übertragungsnummer negiert.

Zum Kodieren der zu übertragenden Information mit der ersten Identifikationsnummer kann vorgesehen sein, dass die zu übertragende Information zumindest Teile der ersten Identifikationsnummer überdeckt. Dies ist eine einfache Möglichkeit der Informationsübertragung, wenn die erste Identifikationsnummer der zweiten Identifikationsnummer angepasst, insbesondere gleichwertig, ist. Dazu ist es jedoch erforderlich, dass dem zweiten Sicherheitsmodul bekannt ist, welche Bitstellen der zweiten Identifikationsnummer von der zu übertragenden Information belegt werden. In einer besonders vorteilhaften Ausführungsform überlagert die zu übertragende Information die erste und somit zweite Identifikationsnummer von ihrer letzten Bitstelle her.

Zur Übertragung der Information ist vorzugsweise diese in einer zusammenhängenden Folge in der Übertragungsnummer des ersten Sicherheitsmoduls enthalten. Da dem zweiten Sicherheitsmodul die Startbitstelle der kodierten zu übertragenden Information im Bezug zur zweiten Identifikationsnummer bekannt ist, vergleicht das zweite Sicherheitsmodul einen Kollisionshinweis einer Kollisionsabfrage an der Kollisionsbitstelle n mit der zweiten Identifikationsnummer. Aus dem Vergleich kann somit ein erster Teil der zu übertragenden Information bestimmt werden. Der erste Teil der zu übertragenden Information besteht somit aus einem Bereich, beginnend mit der Startbitstelle bis zur Kollisionsbitstelle m, wobei die Kollisionsbitstelle m negiert wird. Empfängt das zweite Sicherheitsmodul eine weitere Kollisionsabfrage wird als neue Startbitstelle mneu die $(m_{alt}+1)$-te Bitstelle verwendet und der nächste Teil der zu übertragenden Stelle wäre entsprechend durch das Intervall der Bitstellen $]m_{alt} +1; m_{neu}]$ beschrieben. Auch hier wird die neue Kollisionsbitstelle mneu negiert. $m_{alt}$ beschreibt die Kollisionsbitstelle der letzten Kollision. Die Schritte zum Ermitteln der Teilabschnitte der Information werden vom zweiten Sicherheitsmodul so oft durchgeführt, bis das zweite Sicherheitselement eine Abfrage empfängt, die keine Abfrage im Rahmen einer Antikollisionsphase ist. In diesem Fall beschreibt der letzte Teilabschnitt der zu übertragenden Information das Intervall für die Bitstellen ab und exklusive der letzten Kollisionsbitstelle bis zur letzten Bitstelle der in der zweiten Identifikationsnummer enthaltenen zu übertragenden Information. Alternativ zur negierten Kollisionsbitstelle kann auch das Intervall der Teilabschnitte um eine Bitstelle versetzt, nämlich $[m_{alt}; m_{neu-1}]$, definiert werden. Bei diesem Verfahren muss jedoch die Kollisionsbitstelle nicht negiert werden. Die zu übertragene Information setzt sich aus der Folge von Teilabschnitte zusammen. Das zweite Sicherheitsmodul kann die zu übertragende Information somit aus der Bitlänge der zu übertragenden Information, der Bitlänge und dem Inhalt der zweiten Identifikationsnummer und der negierten m-ten Bitstelle der zweiten Identifikationsnummer dekodieren.

Somit wird die zu übertragende Information nicht nur innerhalb eines Antikollisionszyklus übertragen. Vielmehr wird die Information über mehrere Antikollisionszyklen übertragen. Das zweite Sicherheitsmodul setzt die zu übertragende Information aus den jeweils zuvor bestimmten Teilabschnitten zusammen, was einen erheblichen Mehrwert zur gesicherten Datenübertragung leistet. Die zusammengesetzten Teilabschnitte können zusätzlich verschlüsselt insbesondere in einer codierten Reihenfolge vorliegen, so dass zur Entschlüsselung und/ oder für das Zusammensetzen auch ein Algorithmus verwendet werden kann.

Vorzugsweise entspricht die erste Identifikationsnummer gleich der zweiten Identifikationsnummer. Somit kann bereits ab der ersten Antikollisionsabfrage gezielt im Hinblick auf das zweite Sicherheitsmodul die zu übertragende Information übertragen werden.

Ein erstes Sicherheitsmodul gemäß der vorliegenden Erfindung zur Übertragung einer Information an ein zweites Sicherheitsmodul umfasst eine Speichereinheit, eine Sende- und Empfangseinheit und eine Verarbeitungseinheit. Die Verarbeitungseinheit ist ausgebildet, eine Abfrage zu analysieren und eine Antwort zu erstellen. Die Abfrage ist dabei eine Abfrage im Rahmen einer Antikollisionsphase. Das erste Sicherheitsmodul ist dadurch gekennzeichnet, dass die Antwort derart ausgebildet ist, das Antikollisionsverhalten des Kommunikationsgeräts zu beeinflussen, wobei in der Antwort des ersten Sicherheitsmoduls die Information kodiert ist.

In einem Aspekt kann das erste Sicherheitsmodul ausgebildet sein, die zu übertragende Information über das Antikollisionsprotokoll zu übertragen. Bei dem Antikollisionsprotokoll handelt es sich um ein bereits verwendetes Übertragungsprotokoll. Da ein bekanntes und verwendetes Übertragungsprotokoll verwendet wird, müssen beispielsweise in der Infrastruktur keine Änderungen sowohl hinsichtlich der Software als auch der Hardware durchgeführt werden. Dies bedeutet, dass beispielsweise an bereits installierten Kartenlesersystem keine Änderungen oder Anpassungen durchgeführt werden müssen. Das Übertragen von Informationen mithilfe des ersten Sicherheitsmoduls gemäß der Erfindung ist somit ohne technischen Aufwand, beispielsweise eine Änderung eines bestehenden Systems, möglich. Weiterhin ist die das erste Sicherheitsmodul unmittelbar in jedem System mit dem zweiten Sicherheitsmodul einsetzbar.

Weiterhin kann vorgesehen sein, dass das erste Sicherheitsmodul zur Durchführung eines des oben beschriebenen Verfahrens eingerichtet ist und/ oder zur Teilnahme an einem der oben beschriebenen Verfahren ausgebildet ist.

Ein zweites Sicherheitsmodul gemäß der Erfindung ist zur Durchführung eines der oben beschriebenen Verfahren und/ oder zur Teilnahme an einem der oben beschriebenen Verfahren ausgebildet.

Die Erfindung wird im Folgenden noch weiter beispielhaft anhand der Zeichnungen erläutert. Es zeigen:

Fig. 1 eine beispielhafte schematische Darstellung zur Übertragung einer Information von einem ersten Sicherheitsmodul auf ein zweites Sicherheitsmodul;

Fig. 2 ein beispielhaftes Ablaufschema des Verfahrens gemäß der Erfindung für das erste Sicherheitsmodul;

Fig. 3 ein beispielhaftes Ablaufschema des Verfahrens gemäß der Erfindung für das zweite Sicherheitsmodul;

Fig. 4 ein Beispiel einer Informationsübertragung gemäß der Erfindung;

Fig. 5 eine Ausführungsform des ersten Sicherheitsmoduls

Fig. 6 eine Ausführungsform eines zweiten Sicherheitsmoduls

Zur besseren Übersicht und Verständlichkeit bezeichnen gleiche Bezugszeichen gleiche oder funktionsgleiche Komponenten und/ oder Schritte, soweit nichts Gegenteiliges angegeben ist. Zu den Abfragen, Befehlen und Antworten sind jeweils nur Auszüge aufgezeigt. Selbstverständlich können die Abfragen, Befehle und Antworten inhaltlich mehrere Bestandteile umfassen.

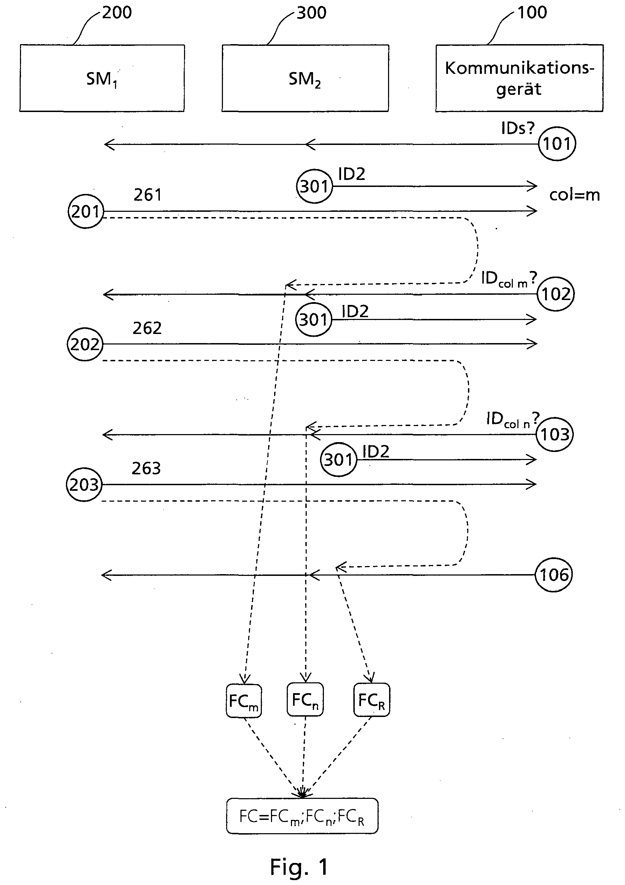

In der Figur 1 ist beispielhaft ein Kommunikationsverfahren zur Übertragung einer Information von einem ersten Sicherheitsmodul (SMi) 200 auf ein zweites Sicherheitsmodul $(SM_2)$ 300 dargestellt. In diesem Ausführungsbeispiel handelt es sich bei der Information um einen Freigabecode FC. Nachdem das erste und zweite Sicherheitsmodul 200, 300 in den Wirkkreis eines Kommunikationsgeräts 100 gelangen sind, versendet das Kommunikationsgerät 100 eine erste Abfrage 101. Mit der ersten Abfrage 101 frägt das Kommunikationsgerät 100 alle im Wirkkreis befindlichen Sicherheitsmodule an, ein Identifikationsmerkmal zu versenden (IDs?). Die erste Abfrage 101 ist dabei eine erste Antikollisionsabfrage, eine sogenannte Initialabfrage. Die erste Abfrage 101 wird sowohl vom ersten Sicherheitsmodul 200 als auch vom zweiten Sicherheitsmodul 300 empfangen.

Nach Empfang der ersten Abfrage 101 vom zweiten Sicherheitsmodul 300 wird die erste Abfrage 101 verarbeitet und eine reguläre Antwort 301 versandt. Die reguläre Antwort 301 umfasst eine zweite Identifikationsnummer $ID_2$ des zweiten Sicherheitsmoduls 300. Nachdem das erste Sicherheitsmodul 200 die erste Abfrage 101 empfängt, wird vom ersten Sicherheitsmodul 200 der Freigabecode FC mit einer ersten Identifikationsnummer ID1 des ersten Sicherheitsmoduls 200 zu einer ersten Übertragungsnummer 261 kodiert. In diesem Beispiel ist die erste Identifikationsnummer ID1 gleich der zweiten Identifikationsnummer ID2. Die erste Übertragungsnummer 261 wird anschließend in die erste Antwort 201 des ersten Sicherheitsmoduls 200 eingebracht und an das Kommunikationsgerät 100 versendet. Die erste Antwort 201 und reguläre Antwort 301 bewirken im Kommunikationsgerät 100 eine Kollision an der Bitstelle m (col=m).

Die Kollision der ersten Antwort 201 und regulären Antwort 301 veranlasst das Kommunikationsgerät 100 im Rahmen der Antikollisionsphase eine weitere, zweite Abfrage 102 zum Identifizieren durch die Sicherheitsmodule zu versenden. Bei der zweiten Abfrage 102 Abfrage handelt es sich ebenfalls um eine Antikollisionsabfrage, jedoch um eine sogenannte Kollisionsabfrage. Dabei ist in der zweiten Abfrage 102 ein Hinweis auf die Kollisionsstelle m enthalten.

Das erste Sicherheitsmodul 200 empfängt die zweite Abfrage 102. Anschließend bildet das erste Sicherheitsmodul 200 eine neue, zweite Übertragungsnummer 262. Die zweite Übertragungsnummer 262 unterscheidet sich von der ersten Übertragungsnummer 261 darin, dass die erste Übertragungsnummer 261 an der Kollisionsstelle m negiert vorliegt. Die zweite Übertragungsnummer 262 wird in der zweiten Antwort 202 an das Kommunikationsgerät 100 versandt.

Nach Empfang der zweiten Abfrage 102 durch das zweite Sicherheitsmodul 300 versendet dieses die erste reguläre Antwort 301 mit der zweiten Identifikationsnummer ID2. Da dem zweiten Sicherheitsmodul 300 die Bitlänge des Freigabecodes bekannt ist, könnte das zweite Sicherheitsmodul 300 durch Gegenüberstellen der zweiten Identifikationsnummer ID2 mit dem Kollisionshinweis aus der zweiten Abfrage 102 den Freigabecode FC ermitteln. Dazu ist dem zweiten Sicherheitsmodul 300 aufgrund des erfindungsgemäßen Verfahrens bekannt, dass der Freigabecode FC erst als vollständig übermittelt gilt, wenn keine Abfrage mit einem Kollisionshinweis vom Kommunikationsgerät 100 empfangen wird. Dies würde bedeuten, dass die Antikollisionsphase beendet ist. Da ein Kollisionshinweis auf die Kollisionsbitstelle m vorliegt, geht das zweite Sicherheitsmodul 300 davon aus, dass der Freigabecode FC noch nicht vollständig übertragen ist. Jedoch deckt sich der Freigabecode FC von der Anfangsbitstelle bis einschließlich der negierten Kollisionsbitstelle m mit der eigenen, zweiten Identifikationsnummer ID2, so dass ein erster Abschnitt des Freigabecodes $FC_m$ gebildet wird.

Die erste reguläre Antwort 301 und zweite Antwort 202 werden vom Kommunikationsgerät 100 empfangen und bewirken eine Kollision an der Bitstelle n. Daraufhin versendet das Kommunikationsgerät 100 eine dritte Abfrage 103 zur Identifizierung durch die Sicherheitsmodule mit einem Kollisionshinweis auf die Kollisionsbitstelle n.

Die dritte Abfrage 103 wird vom Sicherheitsmodul 200 empfangen. Dabei negiert das erste Sicherheitsmodul 200 die zuvor versandte zweite Übertragungsnummer 262 an der Bitstelle n und versendet die neue dritte Übertragungsnummer 263 kodiert in der dritten Antwort 203.

Weiterhin wird die dritte Abfrage 103 vom zweiten Sicherheitsmodul 300 empfangen. Da die dritte Abfrage 103 eine Kollisionsabfrage ist, erkennt das zweite Sicherheitsmodul 300, dass der Freigabecode FC noch nicht vollständig übertragen ist. Das zweite Sicherheitsmodul 300 ermittelt einen zweiten Abschnitt des Freigabecodes $FC_n$ durch Betrachtung des Kollisionshinweises (Kollision an der Bitstelle n) und der zweiten Identifikationsnummer ID2. Der zweite Abschnitt des Freigabecodes $FC_n$ betrifft somit die zweite Identifikationsnummer $ID_2$ ab und exklusive der Bitstelle m bis einschließlich der negierten Bitstelle n. Da die dritte Abfrage 103 eine Abfrage im Rahmen einer Antikollisionsphase ist, versendet das zweite Sicherheitsmodul 300 erneut die erste reguläre Antwort 301 mit der zweiten Identifikationsnummer $ID_2$.

Das Kommunikationsgerät 100 empfängt die erste reguläre Antwort 301 und dritte Antwort 203 und stellt im vorliegenden Fall keine Kollision fest. Daraufhin beginnt das Kommunikationsgerät 100 mit einer Selektion des zweiten Sicherheitsmoduls 300 über einen ersten Befehl 106.

Das erste Sicherheitsmodul 200 empfängt den ersten Befehl 106 (zum Beispiel Select ID2) und erkennt daraus, dass das Antikollisionsverfahren abgeschlossen ist, worauf das erste Sicherheitsmodul 200 keine Kommunikation mit dem Kommunikationsgerät 100 durchführt und insbesondere eine Verarbeitung von Befehlen unterlässt.

Das zweite Sicherheitsmodul 300 erkennt aus dem ersten Befehl 106 ebenfalls, dass es sich um keine Abfrage im Rahmen der Antikollisionsphase handelt. Ein dritter, restlicher, Abschnitt des Freigabecodes $FC_R$ wird somit ab und exklusive der Bitstelle n bis einschließlich der letzten Bitstelle der zweiten Identifikationsnummer ID2 gebildet. Schließlich werden der erste, zweite und dritte Abschnitt $FC_m$, $FC_n$, $FC_R$ des Freigabecodes FC zusammengesetzt, was den Freigabecode FC ergibt. Anschließend vergleicht das zweite Sicherheitsmodul 300 den ermittelten Freigabecode FC mit einer im zweiten Sicherheitsmodul 300 gespeicherten Freigabeinformation. Führt der Vergleich zu einem positiven Ergebnis ist das zweite Sicherheitsmodul 300 für eine Datenkommunikation mit dem Kommunikationsgerät 100 und/ oder die Verwendung zur Bestätigung einer Transaktion freigegeben. Andernfalls ist das zweite Sicherheitsmodul 300 für eine Transaktion gesperrt.

Die Übertragung des Freigabecodes FC ist hier nur beispielhaft auf drei Antikollisionsabfragen beschränkt. Ein Fachmann erkennt sofort, dass es sich auch lediglich um zwei Abfragen oder eine Vielzahl von Abfragen im Rahmen einer Antikollisionsphase handeln kann. Dementsprechend kann sich die zu übertragende Information aus zwei oder mehreren Abschnitten zusammensetzen. Grundsätzlich hängt jedoch hier die Anzahl der Abschnitte von dem Unterschied und der Art der in den Antworten codierten Information und der zweiten Identifikationsnummer ab.

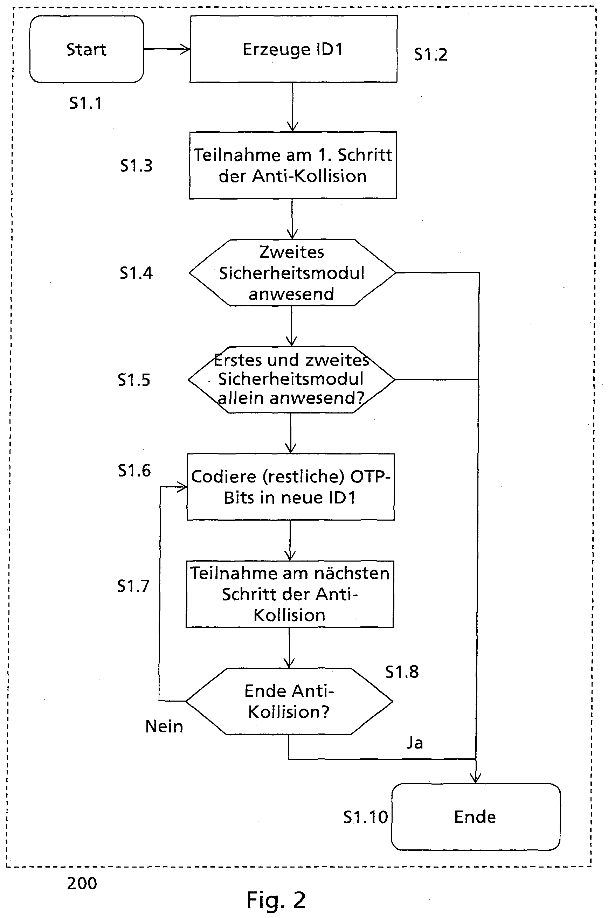

In der Figur 2 sind mehrere Schritte im ersten Sicherheitsmodul 200 zur Übertragung einer Information vom ersten Sicherheitsmodul 200 auf das zweites Sicherheitsmodul (nicht dargestellt) entsprechend eines Ausführungsbeispiels gemäß der Erfindung gezeigt. Nachdem im Schritt S1.1 das erste Sicherheitsmodul 200 und zweite Sicherheitsmodul in den Wirkkreis des Kommunikationsgeräts (nicht dargestellt) gebracht wurde, empfängt das erste Sicherheitsmodul 200 eine Startabfrage vom Kommunikationsgerät. Diese Startabfrage ist bereits als Abfrage im Rahmen einer Antikollisionsphase, nämlich als Initialabfrage, zu verstehen. Dabei fordert das Kommunikationsgerät die anwesenden Sicherheitsmodule zur Identifikation auf. Im Schritt S1.2 erzeugt das erste Sicherheitsmodul 200 eine erste Identifikationsnummer ID1, die sich vorzugsweise nur gering von der zweiten Identifikationsnummer des zweiten Sicherheitsmoduls unterscheidet. Beispielsweise ist die erste Identifikationsnummer ID1 nur bei einer Bitstelle a gegenüber der zweiten Identifikationsnummer invertiert. Das erste Sicherheitsmodul 200 sendet die erste Identifikationsnummer ID1 an das Kommunikationsgerät und nimmt somit an einem ersten Schritt des Antikollisionsverfahrens teil (S1.3).

Das Kommunikationsgerät ermittelt eine erste Kollision und versendet daraufhin eine erste Kollisionsabfrage. Aus der ersten Kollisionsabfrage erkennt das erste Sicherheitsmodul 200, ob das zweite Sicherheitsmodul anwesend ist (S1.4) und ob möglicherweise noch weitere Sicherheitsmodule anwesend sind (S1.5). Dazu wird analysiert, an welcher Bitstelle die erste Kollision stattgefunden hat. Sofern die Bitstelle der ersten Kollision der Bitstelle a entspricht, kann mit einer bestimmten Wahrscheinlichkeit p davon ausgegangen werden, dass es sich bei dem zweiten Sicherheitsmodul um das "richtige" zweite Sicherheitsmodul handelt. Die Wahrscheinlichkeit p berechnet sich über die Formel

$$p = \frac{2^a - 1}{2^a}.$$

Entspricht jedoch die Bitstelle der ersten Kollision nicht der Bitstelle a, ist noch ein weiteres Sicherheitsmodul anwesend und/ oder das zweite Sicherheitsmodul nicht anwesend. Im Fall, dass das zweite Sicherheitsmodul nicht anwesend ist und/ oder das erste Sicherheitsmodul 200 und zweite Sicherheitsmodul nicht alleine im Wirkkreis des Kommunikationsgerät anwesend sind, findet ein Abbruch der Kommunikation mit dem Kommunikationsgerät statt. Eine weitere Kommunikation zwischen dem ersten Sicherheitsmodul 200 und dem Kommunikationsgerät wird in diesem Beispiel für die aktuelle Sitzung verhindert (S1.10). Dies kann beispielsweise durch Speichern einer Sperrinformation stattfinden.

Entspricht die Bitstelle der ersten Kollision der Bitstelle a, sind das erste Sicherheitsmodul 200 und zweite Sicherheitsmodul mit hoher Wahrscheinlichkeit alleine im Wirkkreis des Kommunikationsgeräts anwesend. Weiterhin ermittelt das erste Sicherheitsmodul 200, dass es sich beim zweiten Sicherheitsmodul um das "richtige" zweite Sicherheitsmodul handelt. Daraufhin wird die zu übertragende Information in einem Schritt S1.6 mit einer neuen ersten Identifikationsnummer ID1 zu einer Übertragungsnummer kodiert. Die neue erste Identifikationsnummer ID1 entspricht dabei vorzugsweise der zweiten Identifikationsnummer des zweiten Sicherheitsmoduls. Bei der Information handelt es sich im Folgenden um ein Passwort, ein sogenanntes "One Time Password" (OTP). Nach dem Bilden der Übertragungsnummer wird diese im Schritt S1.7 als Antwort auf die erste Antikollisionsabfrage an das Kommunikationsgerät versendet, so dass das erste Sicherheitsmodul 200 am nächsten Antikollisionsschritt teilnimmt.

Anschließend wird im Schritt S1.8 eine weitere Abfrage vom Kommunikationsgerät empfangen und geprüft, ob diese weitere Abfrage eine Antikollisionsabfrage, insbesondere eine Kollisionsabfrage ist.

Bei einem positiven Prüfergebnis nimmt das erste Sicherheitsmodul 200 an den weiteren Schritten der Antikollision wiederholt teil und führt die Schritte S1.6 bis S1.8 erneut aus. Jedoch wird jeweils die vorhergehende Übertragungsnummer als Grundlage verwendet und auf den Kollisionshinweis der Antikollisionsabfrage angepasst. So wird jeweils im Schritt S1.6 das dem Kollisionshinweis entsprechenden Kollisionsbit negiert. Die neue Übertragungsnummer wird schließlich wieder im Schritt S1.7 versandt.

Ein negatives Prüfergebnis führt das erste Sicherheitsmodul 200 zu der Erkenntnis, dass die Information, beispielsweise ein OTP, an das zweite Sicherheitsmodul übertragen wurde. Die Kommunikation für die laufende Sitzung mit dem Kommunikationsgerät wird schließlich beendet (S1.10).

Allgemeiner lassen sich somit die Schritte für das erste Sicherheitsmodul 200 wie folgt formulieren:

S1.1: Start (Initialstart)

S1.2: Erzeuge eine erste ID1 in Abhängigkeit der zweiten Identifikationsnummer

S1.3: Teilnahme am ersten Schritt des Antikollisionsverfahrens durch Senden der ersten Identifikationsnummer ID1

S1.4: Prüfen, ob zweites Sicherheitsmodul anwesend ist

S1.5: Prüfen, ob erstes Sicherheitsmodul 200 und zweites Sicherheitsmodul allein im Wirkkreis des Kommunikationsgeräts anwesend sind

S1.6: Kodieren der Information mit der ersten Identifikationsnummer ID1 zu einer (erneuten) Übertragungsnummer

S1.7: Senden der Übertragungsnummer

S1.8: Prüfen, ob die weitere Abfrage eine Abfrage im Rahmen einer Antikollisionsphase ist; wobei:

wenn die weitere Abfrage eine Abfrage im Rahmen einer Antikollisionsphase ist,

- die Schritte S1.6 bis S1.8 wiederholt werden; und
- im Schritt S1.6 aus der weiteren Abfrage die voraussichtlich vom zweiten Sicherheitsmodul noch nicht erfassten Werte der zu übertragenen Information (restliche Bits) mit der zweiten Identifikationsnummer in eine neue Übertragungsnummer kodiert werden; und

wenn die weitere Abfrage keine Antikollisionsabfrage ist, Schritt S1.10 ausgeführt wird

S1.10: Kommunikation Ende

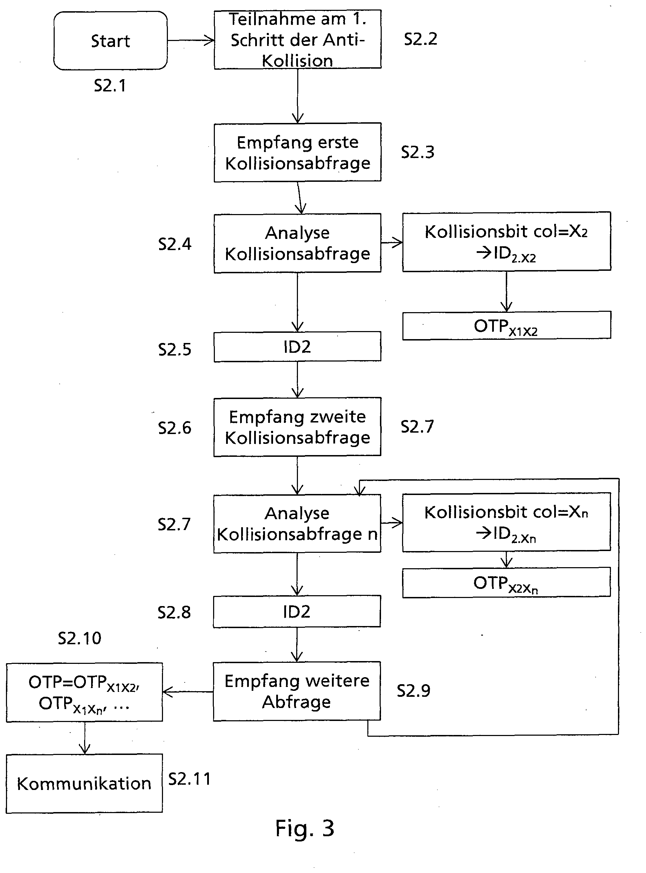

Die Figur 3 für das zweite Sicherheitsmodul 300 Schritte zur Übertragung der Information vom ersten Sicherheitsmodul 200 (nicht dargestellt) zum zweiten Sicherheitsmodul 300 anhand eines Ausführungsbeispiels dar. In einem ersten Schritt S2.1 wird das zweite Sicherheitsmodul 300 in den Wirckreis des Kommunikationsgeräts (nicht dargestellt) gebracht. Dabei versendet das Kommunikationsgerät die Startabfrage (Initialabfrage). Da das zweite Sicherheitsmodul 300 mit der Startabfrage angesprochen wird, nimmt dieses an der Antikollisionsphase teil (S2.2). Dabei sendet das zweite Sicherheitsmodul 300 eine reguläre Antwort, die die zweite Identifikationsnummer ID2 des zweiten Sicherheitsmoduls 300 umfasst.

Anschließend empfängt das zweite Sicherheitsmodul 300 im Schritt S2.3 die erste Kollisionsabfrage. Im Schritt S2.4 prüft das zweite Sicherheitsmodul 300, ob es sich bei der ersten Antikollisionsabfrage um eine Abfrage im Rahmen einer Antikollisionsphase handelt. Das zweite Sicherheitsmodul 300 ermittelt anhand einer in der ersten Antikollisionsabfrage enthaltenen Kollisionsinformation (Kollisionshinweise) ein Kollisionsbit $ID_{2.X2}$ an der Stelle X2 der zweiten Identifikationsnummer $ID_2$. Dazu sind dem zweiten Sicherheitsmodul 300 die Bitlänge und das Startbit des OTP bekannt. Aus dem Startbit, der Bitlänge des OTP und/ oder der Bitlänge der zweiten Identifikationsnummer ID2 bestimmt das zweite Sicherheitsmodul 300 den Startpunkt des OTP $ID_{2.X1}$ im Bezug zur zweiten Identifikationsnummer ID2. Ein erster Abschnitt des OTP: $OTP_{X1X2}$ ergibt sich somit aus der zweiten Identifikationsnummer 300

$$\left[ ID_{2.X1}, ..., ID_{2.X(2-1)}, \overline{ID}_{2X2} \right]$$

wobei $\overline{ID}_{2X2}$ den negativen Bitwert zum Kollisionsbit $ID_{2.X2}$ der zweiten Identifikationsnummer $ID_2$ beschreibt. Auf die erste Kollisionsabfrage sendet das zweite Sicherheitsmodul 300 im Schritt S2.5 erneut die reguläre Antwort mit der zweiten Identifikationsnummer $ID_2$.

Im vorliegenden Beispiel wird aufgrund einer vom Kommunikationsgerät ermittelten Kollision eine zweite Kollisionsabfrage versendet und im Schritt S2.6 vom zweiten Sicherheitsmodul 300 empfangen. Da die zweite Kollisionsabfrage das zweite Sicherheitsmodul 300 betrifft, analysiert im Schritt S2.7 das zweite Sicherheitsmodul 300 die zweite Kollisionsabfrage. Anhand der zweiten Kollisionsabfrage wird eine zweite Kollisionsinformation über die vom Kommunikationsgerät ermittelte Kollision an der Bitstelle n dem zweiten Sicherheitsmodul 300 mitgeteilt (col=Xn). Aus dieser Kollisionsinformation bestimmt das zweite Sicherheitsmodul 300 das Kollisionsbit $ID_{2.Xn}$, sowie den zweiten Abschnitt des OTPs: $OTP_{X2Xn}$ aus der zweiten Identifikationsnummer analog zum ersten Abschnitt des OTPs $OTP_{X1X2}$:

$$\left[ ID_{2.X(2+1)}, ..., ID_{2.(n-1)}, \overline{ID}_{2.Xn} \right]$$

Weiterhin nimmt es an diesem Antikollisionsverfahren teil und sendet das zweite Sicherheitsmodul 300 im Schritt S2.8 auf die zweite Kollisionsabfrage die reguläre Antwort mit der zweiten Identifikationsnummer ID2. Anschließend wird im Schritt S2.9 vom zweiten Sicherheitsmodul 300 eine weitere Abfrage empfangen. Falls es sich bei der weiteren Abfrage um eine Kollisionsabfrage handelt, wird analog der zweiten Abfrage mit dem Schritt 2.7 weiter verfahren. Handelt es sich bei der weiteren Abfrage nicht um eine Kollisionsabfrage, wird mit dem Schritt 2.10 weiterverfahren.

Ergibt im Schritt S2.10, dass die weitere Abfrage keine Abfrage im Rahmen einer Antikollisionsphase ist, wird das OTP wie folgt bestimmt:

$$OTP = OTP_{X1X2}, ..., OTP_{X2Xn} ; ...$$

Über ein Vergleichsergebnis des ermittelten OTPs aus dem Antikollisionsverfahren mit einem im zweiten Sicherheitsmodul 300 gespeicherten/ hinterlegten Wert kann eine bestimmte Funktion, beispielsweise das Durchführen von Transaktionen, freigegeben werden und/ oder eine Kommunikation (S2.11) mit dem Kommunikationsgerät stattfinden.

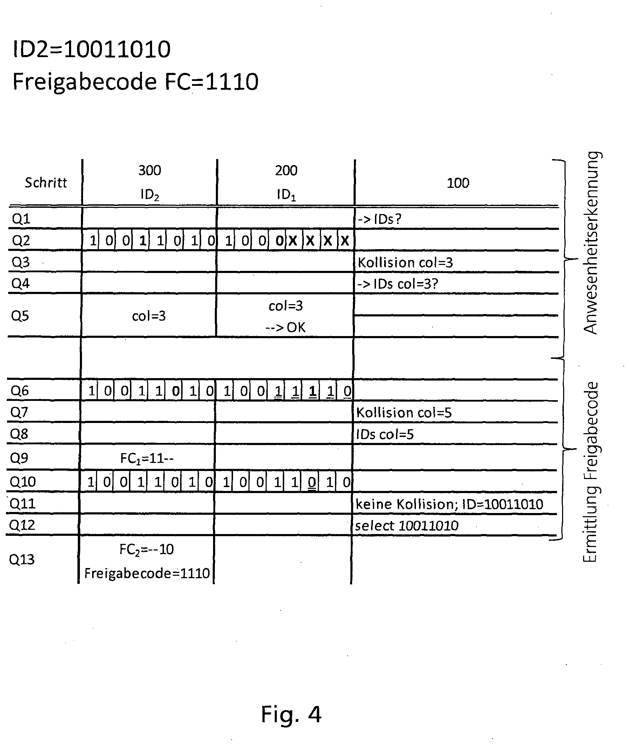

In der Figur 4 ist anhand eines Beispiels die Informationsübertragung vom ersten Sicherheitsmodul 200 auf das zweite Sicherheitsmodul 300 anhand eines konkreten Beispiels mit Zahlen dargestellt. Dazu ist zu vermerken, dass die erste Identifikationsnummer ID1 des ersten Sicherheitsmoduls 200 dynamisch ausgeprägt ist. Die zu übertragende Information ist einen Freigabecode FC mit dem Inhalt "1110". Die dargestellte Tabelle soll zu den Schritten Q1 bis Q13 das rechnerische Verfahren des Informationsaustauschs veranschaulichen. Dabei sind jeweils die zur beispielhaften Beschreibung der Erfindung die dynamische erste und die zweite Identifikationsnummer ID1, ID2 in den Antworten vom ersten Sicherheitsmodul 200 und zweiten Sicherheitsmodul 300 und Abfragen des Kommunikationsgeräts 100 in den entsprechenden Spalten dargestellt.

Im Rahmen einer Antikollisionsphase versendet das Kommunikationsgerät 100 zum Schritt Q1 eine Startabfrage nach Identifikationsnummern der im Wirkkreis befindlichen Sicherheitsmodule: "IDs?" Auf die Startabfrage antwortet zum Schritt Q2 das zweite Sicherheitsmodul 300 mit seiner regulären Antwort mit der zweiten Identifikationsnummer ID2 "10011010" als Inhalt. Das erste Sicherheitsmodul 200 hingegen antwortet mit einer an die zweite Identifikationsnummer ID2 angepasste erste Identifikationsnummer ID1. Dabei liegt hinsichtlich der zweiten Identifikationsnummer ID2 die Bitstelle 3 invertiert vor. Die Bitstellen 4 bis 7 können beliebig "xxxx" ausgefüllt sein. Der Unterschied zwischen der ersten Identifikationsnummer ID1 und der zweiten Identifikationsnummer ID2 ist in jeder Zeile fett gekennzeichnet.

Die erste Identifikationsnummer ID1 und zweite Identifikationsnummer $ID_2$ werden vom Kommunikationsgerät 100 empfangen und erzeugen zum Schritt Q3 im Kommunikationsgerät 100 eine erste Kollision "col=3". Auf die vom Kommunikationsgerät 100 ermittelte erste Kollision erstellt das Kommunikationsgerät 100 zum Schritt Q4 eine erste Kollisionsabfrage, wodurch ein Separieren stattfinden soll.

Diese erste Kollisionsabfrage wird im Schritt Q5 sowohl vom ersten als auch zweiten Sicherheitsmodul 200, 300 empfangen. Diese erste Kollisionsabfrage enthält eine erste Kollisionsinformation zur ersten Kollision col=3. Aus der ersten Kollisionsinformation stellt das erste Sicherheitsmodul 200 mit hoher Wahrscheinlichkeit (s. Formel oben) fest, dass sich das zweite Sicherheitsmodul 300 zusammen mit dem ersten Sicherheitsmodul 200 alleine im Wirckreis des Kommunikationsgeräts 100 befinden. Daraus ergibt sich, dass das zweite Sicherheitsmodul 300 die weiteren Schritte zur Übertragung des Freigabecodes FC einleiten darf. Die Anwesenheitserkennung ist somit Abgeschlossen.

Auf die erste Kollisionsabfrage antwortet im Schritt Q6 das zweite Sicherheitsmodul 300 mit der regulären Antwort. Dies bedeutet, dass das zweite Sicherheitsmodul 300 seine zweite Identifikationsnummer ID2 "10011010" an das Kommunikationsgerät 100 versendet. Das erste Sicherheitsmodul 200 hingegen kodiert den Freigabecode "1110" in die erste Identifikationsnummer ID1, wobei der Freigabecode FC die erste Identifikationsnummer $ID_1$ von der letzten Bitstelle auffüllt und/ oder überdeckt. Somit entsteht eine erste Übertragungsnummer "10011110". Wie zu erkennen ist, sind die Werte der Bitstellen 0 bis 4 der ersten Übertragungsnummer gleich den Bitstellen 0 bis 4 der zweiten Identifikationsnummer ID2. Die geänderten Bitstellen der ersten Übertragungsnummer sind in jeder Zeile durch Unterstriche in der Übertragungsnummer gekennzeichnet. Im Schritt Q6 versenden das erste Sicherheitsmodul 200 die erste Übertragungsnummer und das zweite Sicherheitsmodul 300 die zweite Identifikationsnummer ID2 an das Kommunikationsgerät 100.

Im Schritt Q7 empfängt das Kommunikationsgerät 100 die erste Übertragungsnummer und zweite Identifikationsnummer ID2 und stellt eine Kollision an der Bitstelle 5 fest (fett bei Q6 gekennzeichnet). Daraufhin versendet zum Schritt Q8 das Kommunikationsgerät 100 eine zweite Kollisionsabfrage hinsichtlich der Kollision an der Bitstelle 5 mit der Kollisionsinformation col=5.

Nach Empfang der zweiten Kollisionsabfrage erkennt das zweite Sicherheitsmodul 300 im Schritt Q9, dass eine zweite Antikollisionsabfrage versandt wurde. Das zweite Sicherheitsmodul 300 ermittelt somit, dass der zu erwartende Freigabecode FC in mindestens zwei Teilabschnitte versendet wird, vorliegend aber ein erster Teilbereich FC1 ermittelt werden kann. Dieser erste Teilbereich FC1 besteht aus den Bitstellen 4 und 5. Dabei werden alle für den Freigabecode FC relevanten Bitstellen mit der zweiten Identifikationsnummer ID2 bis zur Kollisionsstelle col=5 herangezogen, wobei der Wert der Kollisionsstelle negiert wird. Somit ergibt sich als erster Teilbereich des Freigabecodes: $FC_1$="11". Für den Freigabecode FC folgt daraus: FC=11??.

Auf die zweite Kollisionsabfrage versendet das zweite Sicherheitsmodul 300 im Schritt Q10 erneut die reguläre Antwort mit der zweiten Identifikationsnummer ID2. Das erste Sicherheitsmodul 200 bildet im Vergleich zur ersten Übertragungsnummer aus der Kollisionsinformation col=5 an dieser Bitstelle eine Negierung, woraus sich eine zweite Übertragungsnummer "10011010" ergibt. Anschließend versendet das erste Sicherheitsmodul diese zweite Übertragungsnummer.

Im Schritt empfängt im Schritt Q11 das Kommunikationsgerät 100 die zweite Übertragungsnummer und reguläre Antwort, wobei das Kommunikationsgerät 100 keine Kollision erkennt. Darauf wählt das Kommunikationsgerät als Schritt Q12 das zweite Sicherheitsmodul 300 über die zweite Identifikationsnummer ID2 (select 10011010) an.

Das zweite Sicherheitsmodul 300 erkennt im Schritt Q13 aus der Abfrage und/ oder Befehl des Kommunikationsgeräts 100, dass es sich nicht mehr um eine Antikollisionsabfrage handelt. Das Antikollisionsverfahren ist nun abgeschlossen. Der zweite und letzte Teilbereich des Freigabecodes $FC_2$ bestimmt sich somit aus der zweiten Identifikationsnummer ID2 bis zur letzten Bitstelle der zweiten Identifikationsnummer $ID_2$, wobei die Bitstellen nachfolgend der letzten Kollisionsstelle (col=5) verwendet werden: $FC_2$="10". Da das Antikollisionsverfahren abgeschlossen ist, werden die Teilbereiche des Freigabecodes FC zusammengesetzt: Freigabecode FC = $FC_1$; $FC_2$ ="1110". Dieser Freigabecode FC kann mit einem im Speicher hinterlegten Wert verglichen werden. Anhand des Prüfergebnisses wird das zweite Sicherheitsmodul 300 für eine weitere Datenkommunikation, für das Durchführen einer Transaktion und/ oder für einen Block an Funktionen freigeschalten. Weiterhin kann das Verhalten des zweiten Sicherheitsmoduls 300 auf bestimmte Abfragen und/ oder Befehle des Kommunikationsgeräts durch den Freigabecode gesteuert werden.

Wie aus diesem Beispiel zu erkennen ist, beeinflusst das erste Sicherheitsmodul 200 anhand der gebildeten ersten und zweiten Übertragungsnummer in Verbindung mit der ersten Identifikationsnummer ID1 das Abfrageverhalten des Kommunikationsgeräts 100. Da dem ersten Sicherheitsmodul 200 die zweite Identifikationsnummer ID2 bekannt ist, kann gezielt an bestimmten Stellen eine Kollision im Antikollisionsverfahren erwirkt werden, so dass das Antikollisionsprotokoll zur Übertragung von Informationen eingesetzt wird. Dazu ist jedoch ein dynamisches Verhalten der ersten Identifikationsnummer respektive Übertragungsnummer notwendig.

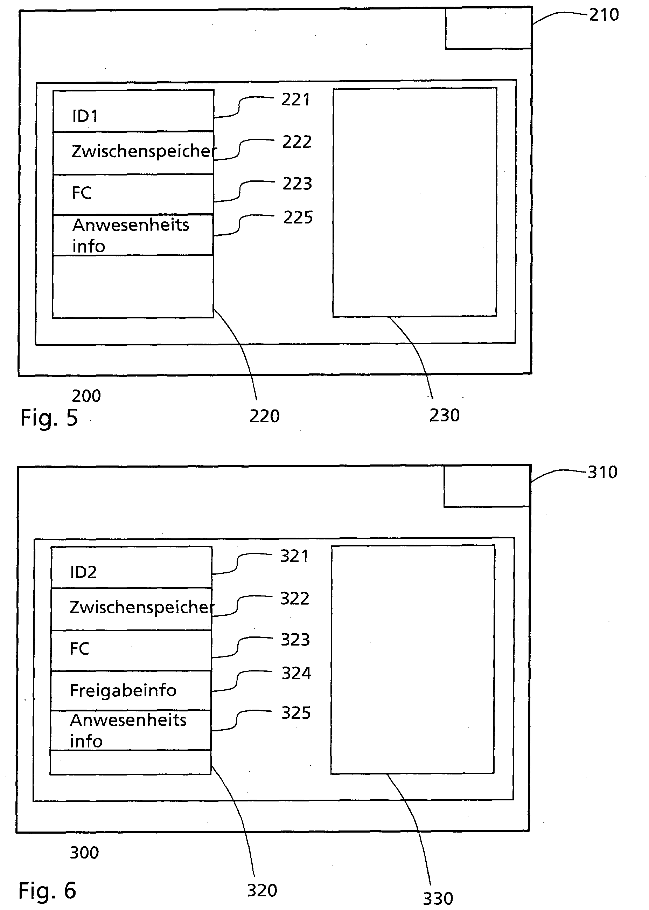

Die Figur 5 stellt schematisch einen beispielhaften Aufbau des ersten Sicherheitsmoduls 200 dar. Das erste Sicherheitsmodul 200 umfasst eine erste Sende- und Empfangseinheit 210, einen ersten Speicherbereich 220 und eine erste Verarbeitungseinheit 230. Der erste Speicherbereich 220 weist einen Speicherplatz 221 zur Aufnahme einer ersten Identifikationsnummer ID1, einen ersten Zwischenspeicher 222, einen ersten Speicherplatz 223 für den Freigabecode FC und einen ersten Speicherplatz 225 zur Aufnahme einer Anwesenheitsinformation auf. Im ersten Zwischenspeicher 222 können beispielsweise Zwischenergebnisse aus der ersten Verarbeitungseinheit 230, die eine oder mehrere Übertragungsnummern und/ oder die eine oder mehrere Kollisionsinformationen umfassen, abgelegt werden.

Die erste Verarbeitungseinheit 230 dient zur Verarbeitung von Abfragen vom Kommunikationsgerät und zum Erstellen von Antworten an das Kommunikationsgerät. Dabei können unter anderem die Abfragen analysiert und ggf. Informationen aus dem ersten Speicherbereich 220 herangezogen werden. Vorzugsweise ist der ersten Verarbeitungseinheit 230 die Vorgehensweise des Kommunikationsgeräts beim Antikollisionsverfahren bekannt, um so ab der ersten Abfrage gezielt Antworten zu verfassen. Somit kann das Kommunikationsgerät beim Bilden neuer Abfragen beeinflusst werden. Mithilfe der erstellten Antworten ist es demnach möglich, den Inhalt der nachfolgenden Antworten zumindest teilweise zu steuern und eine Information zu übertragen.

Wie bereits oben erwähnt ist die erste Identifikationsnummer ID1 dynamisch ausgeprägt und kann entsprechend den Vorgaben der ersten Verarbeitungseinheit 230 variieren.

In der Figur 6 ist rein schematisch in einer beispielhaften Ausführungsform der Aufbau des zweiten Sicherheitsmoduls 300 dargestellt. Das zweite Sicherheitsmodul 300 umfasst eine zweite Sende- und Empfangseinheit 310, einen zweiten Speicherbereich 320 und eine zweite Verarbeitungseinheit 330. Im zweiten Speicherbereich 320 findet sich ein zweiter Speicherplatz 321 für die zweite Identifikationsnummer ID2, ein zweiter Zwischenspeicher 322, ein zweiter Speicherplatz 323 zur Aufnahme des Freigabecodes FC, ein Speicherplatz zur Aufnahme einer Freigabeinformation 324 sowie ein zweiter Speicherplatz 325 zur Aufnahme einer zweiten Anwesenheitsinformation. Über die zweite Anwesenheitsinformation 325 kann unter anderem dargestellt werden, ob das erste Sicherheitsmodul (nicht gezeigt) zusammen und/ oder allein mit dem zweiten Sicherheitsmodul 300 anwesend ist und kann beispielsweise als 1 Bit, wie beispielsweise als Flag, ausgeführt sein.

Die Freigabeinformation 324 gibt in diesem Ausführungsbeispiel an, ob der Freigabecode FC vom ersten Sicherheitsmodul übertragen wurde, der Freigabecode FC dem im zweiten Sicherheitsmodul 300 gespeicherten Freigabecode FC im zweiten Freigabecodespeicher 323 entspricht und/ oder welche Funktion des zweiten Sicherheitsmoduls freigegeben ist. Weiterhin kann die Freigabeinformation 324 benutzt werden, einen Teil oder das gesamte zweite Sicherheitsmodul 300 zu sperren, so dass nur bestimmte Funktionen deaktiviert sind, eine Datenkommunikation mit dem Kommunikationsgerät (nicht dargestellt) eingeschränkt und/ oder vollständig für die laufende Sitzung verhindert wird.

Im Zwischenspeicher 322 können beispielsweise Teilbereiche des übertragenen Freigabecodes als Zwischenergebnisse abgelegt werden. Die Verarbeitungseinheit 330 dient zur Verarbeitung von vom Kommunikationsgerät empfangenen Abfragen und dem Formulieren von Antworten. Dabei führt sie auch die Untersuchung, Analyse und den Vergleich bei den Antikollisionsabfragen zwischen dem Kollisionshinweis, möglichen Zwischenergebnissen und der zweiten Identifikationsnummer ID2 durch.

Während besonders in Fig. 4 das Übertragen der Information in zwei Teilbereichen dargestellt ist, kann anstatt dem Abspeichern des Teils der Information auch lediglich das Abspeichern der Kollisionsstelle ausreichen und bei Beendigung der Antikollisionsphase die Werte der Teilbereiche der Information über die Kollisionsstelle und somit die gesamte Information bestimmt werden.

Wie aus den Ausführungsbeispielen zu entnehmen ist, sind das erste und zweite Sicherheitsmodul 200,300 entsprechend zueinander ausgeprägt. Dies bedeutet, dass dem ersten Sicherheitsmodul 200 bereits Merkmale des zweiten Sicherheitsmoduls 300 bekannt sein müssen. Demzufolge ist es auch vorteilhaft, wenn dem zweiten Sicherheitsmodul 300 Information über die Verarbeitung des ersten Sicherheitsmoduls 200 vorliegen, beispielsweise ob das erste Sicherheitsmodul eine Anwesenheitserkennung weiterer Sicherheitsmodule durchführt.

Die oben beschriebenen Speicherbereiche und im Speicher enthaltenen Merkmale können sowohl in einem von der Verarbeitungseinheit getrennten Speicher enthalten oder auch teilweise in einem in der Verarbeitungseinheit enthaltenem Speicher vorgehalten werden. Somit könnte jede Verarbeitungseinheit auch selbst einen Speicher umfassen. Bei dem Speicher kommen grundsätzlich verschiedene Speicher in Betracht. So wäre beispielsweise für die zweite Identifikationsnummer ein Permanentspeicher sinnvoll, wogegen insbesondere für die erste Identifikationsnummer und/ oder Übertragungsnummer ein flüchtiger Speicher vorgesehen sein kann. Bei jeder der beschriebenen Verarbeitungseinheiten könnte es sich um eine CPU handeln, die einen Mikroprozessor aufweist.

**Patentansprüche**

1.  Verfahren in einem System, umfassend ein erstes und ein zweites Sicherheitsmodul (200, 300) sowie wenigstens ein Kommunikationsgerät (100), wobei eine Antikollisionsphase eine Folge von Antikollisionsabfragen des Kommunikationsgeräts (100) umfasst und eine Kommunikationsphase auf die Antikollisionsphase folgt; das erste Sicherheitsmodul (200) eine zu übertragende Information in der Antikollisionsphase zu dem zweiten Sicherheitsmodul (300) durch Senden von Antworten des ersten Sicherheitsmoduls (200) auf die Folge von Antikollisionsabfragen überträgt, wobei die zu übertragende Information in den Antworten des ersten Sicherheitsmoduls (200) kodiert ist; und das zweite Sicherheitsmodul (300) die zu übertragende Information aus der Folge der empfangenen Antikollisionsabfragen dekodiert, **dadurch gekennzeichnet, dass** die Antworten des ersten Sicherheitsmoduls (200) dynamisch ausgebildet sind und das erste Sicherheitsmodul (200) über jede der Antworten die Inhalte der Folge von nachfolgenden Antikollisionsabfragen deterministisch beeinflusst.

2.  Verfahren nach Anspruch 1, **dadurch gekennzeichnet, dass** die zu übertragende Information vom ersten Sicherheitsmodul (200) zum zweiten Sicherheitsmodul (300) über ein Antikollisionsprotokoll, bei dem es sich um ein bekanntes und verwendetes Übertragungsprotokoll handelt, übertragen wird.

3.  Verfahren nach einem der Ansprüche 1 oder 2, **dadurch gekennzeichnet, dass** das zweite Sicherheitsmodul (300) nach Empfang der übertragenen Information eine Sicherheitsinformation speichert.

4.  Verfahren nach einem der vorhergehenden Ansprüche, **dadurch gekennzeichnet, dass** die zu übertragende Information ein Freigabecode (FC) ist.

5.  Verfahren nach Anspruch 4, **dadurch gekennzeichnet, dass** der Freigabecode (FC) das zweite Sicherheitsmodul (300) für die Kommunikationsphase freigibt.

6.  Verfahren nach einem der vorhergehenden Ansprüche, **dadurch gekennzeichnet, dass** das erste und/ oder zweite Sicherheitsmodul (200, 300) prüft, ob ein weiteres Sicherheitsmodul in deren Umfeld anwesend ist.

7.  Verfahren nach einem der vorhergehenden Ansprüche, **dadurch gekennzeichnet, dass** auf eine erste Antikollisionsabfrage (101) der Folge der Antikollisionsabfragen die Antwort des ersten Sicherheitsmoduls (200) eine erste Antwort (201) ist, das erste Sicherheitsmodul (200) die erste Antikollisionsabfrage (101) auswertet, und entsprechend dem Ergebnis der Auswertung zum Kodieren der zu übertragenden Information in der ersten Antwort (201)

    a1. die Information mit einer ersten Identifikationsnummer (ID1) des ersten Sicherheitsmoduls (200) zu einer ersten Übertragungsnummer übertragen wird, und
    b1. die Übertragungsnummer in die erste Antwort (201) eingebunden wird.

8.  Verfahren nach Anspruch 7, **dadurch gekennzeichnet, dass** das erste Sicherheitsmodul (200) aus der Folge von Antikollisionsabfragen eine weitere Antikollisionsabfrage (102, 103) empfängt, diese auswertet und entsprechend dem Ergebnis der Auswertung in einer weiteren Antwort

    c1. die zu übertragende Information mit der ersten Identifikationsnummer (ID1) des ersten Sicherheitsmoduls (200) zu einer weiteren Übertragungsnummer kodiert wird, und

d1. die weitere Übertragungsnummer in der weiteren Antwort (202, 203) eingebunden wird.

9. Verfahren nach einem der vorhergehenden Ansprüche, **dadurch gekennzeichnet, dass** das zweite Sicherheitsmodul (300) auf jede Antikollisionsabfrage der Folge von Antikollisionsabfragen eine reguläre Antwort (301, 302, 303) versendet, wobei die reguläre Antwort (301, 302, 303) eine zweite Identifikationsnummer (ID2) des zweiten Sicherheitsmoduls (300) umfasst und
die erste und weitere Antwort (201, 202, 203) des ersten Sicherheitsmoduls (200) mit der regulären Antwort (301, 302, 303) des zweiten Sicherheitsmoduls (300) eine Kollision an einer Kollisionsstelle n bewirken und jede Antikollisionsabfrage eine Kollisionsinformation aufweisen.

10. Verfahren nach Anspruch 9, **dadurch gekennzeichnet, dass** das erste Sicherheitsmodul (200) zur Bildung jeder weiteren Übertragungsnummer diese weitere Übertragungsnummer an die Kollisionsstelle n der vorhergehenden Übertragungsnummer anpasst und/ oder an der Kollisionsstelle n der vorhergehenden Übertragungsnummer negiert.

11. Verfahren nach einem der Ansprüche 7 bis 10, **dadurch gekennzeichnet, dass** die zu übertragende Information Teile der ersten Identifikationsnummer (ID1) überdeckt.

12. Verfahren nach Anspruch 10 oder 11, **dadurch gekennzeichnet, dass** das zweite Sicherheitsmodul (300) die zu übertragende Information aus der Bitlänge der Information, der Bitlänge und dem Inhalt der zweiten Identifikationsnummer (ID2) und einer Negierung der n-ten Bitstelle der zweiten Identifikationsnummer (ID2) dekodiert.

13. Verfahren nach einem der vorhergehenden Ansprüche, **dadurch gekennzeichnet, dass** das zweite Sicherheitsmodul (300) aus jeder der Folge von Antikollisionsabfragen einen Teil der zu übertragenden Information bestimmt und nach Ende der Folge von Antikollisionsabfragen die zu übertragende Information bildet.

14. Erstes Sicherheitsmodul (200) zum Übertragen einer zu übertragenden Information an ein zweites Sicherheitsmodul (300) in einem System, das das erste und das zweite Sicherheitsmodul (200,300) sowie wenigstens ein Kommunikationsgerät (100) umfasst, wobei eine Antikollisionsphase eine Folge von Antikollisionsabfragen des Kommunikationsgeräts (100) umfasst und eine Kommunikationsphase auf die Antikollisionsphase folgt und wobei das erste Sicherheitsmodul (200) eine zu übertragende Information in der Antikollisionsphase zu dem zweiten Sicherheitsmodul (300) durch Senden von Antworten des ersten Sicherheitsmoduls (200) auf die Folge von Antikollisionsabfragen überträgt, umfassend eine Speichereinheit (220), eine Sende-Empfangseinheit (210) und eine Verarbeitungseinheit (230), wobei die Verarbeitungseinheit (230) zur Analyse einer Abfrage und Erstellen einer Antwort ausgebildet ist und die Abfrage eine Abfrage im Rahmen einer Antikollisionsphase ist, **dadurch gekennzeichnet, dass** jede der Antworten derart ausgebildet ist, die Inhalte der Folge von nachfolgenden Antikollisionsabfragen des Kommunikationsgeräts (100) deterministisch zu beeinflussen, wobei in den Antworten die Information kodiert enthalten ist.

15. Erstes Sicherheitsmodul nach Anspruch 14, **dadurch gekennzeichnet, dass** die zu übertragende Information an das zweite Sicherheitsmodul (300) über ein Antikollisionsprotokoll, bei dem es sich um ein bekanntes und verwendetes Übertragungsprotokoll handelt, übertragen wird.

16. Erstes Sicherheitsmodul (200) nach Anspruch 15, **dadurch gekennzeichnet, dass** das erste Sicherheitsmodul (200) zum Ausführen eines Verfahrens nach einem der Ansprüche 3 bis 11 ausgebildet ist.

**Claims**

1. A method in a system comprising a first and a second security module (200, 300), as well as at least one communication device (100), wherein an anti-collision phase comprises a sequence of anti-collision queries of the communication device (100), and a communication phase follows the anti-collision phase;
the first security module (200) transmits information to be transmitted to the second security module (300) in the anti-collision phase by sending responses of the first security module (200) to the sequence of anti-collision queries, with the information to be transmitted being encoded in the responses of the first security module (200); and the second security module (300) decodes the information to be transmitted from the sequence of the received anti-collision queries, **characterized in that** the responses of the first security module (200) are configured dynamically and the first security module (200) influences the contents of the sequence of subsequent anti-collision queries deterministically via each of the responses.

2. The method according to claim 1, **characterized in that** the information to be transmitted is transmitted from the first security module (200) to the second security module (300) via an anti-collision protocol which is a known and used transmission protocol.

**3.** The method according to either of claims 1 to 2, **characterized in that** the second security module (300) stores a security information item after reception of the transmitted information.

**4.** The method according to any of the preceding claims, **characterized in that** the information to be transmitted is a release code (FC).

**5.** The method according to claim 4, **characterized in that** the release code (FC) releases the second security module (300) for the communication phase.

**6.** The method according to any of the preceding claims, **characterized in that** the first and/or second security module (200, 300) checks whether a further security module is present in the environment thereof.

**7.** The method according to any of the preceding claims, **characterized in that** upon a first anti-collision query (101) of the sequence of the anti-collision queries the response of the first security module (200) is a first response (201), the first security module (200) evaluates the first anti-collision query (101) and, in accordance with the result of the evaluation, for encoding the information to be transmitted in the first response (201)

     a1. the information is transmitted with a first identification number (ID1) of the first security module (200) to a first transmission number, and
     b1. the transmission number is integrated into the first response (201).

**8.** The method according to claim 7, **characterized in that** the first security module (200) receives a further anti-collision query (102, 103) from the sequence of anti-collision queries, evaluates the latter and according to the result of the evaluation in a further response

     c1. the information to be transmitted is encoded with the first identification number (ID1) of the first security module (200) to form a further transmission number, and
     d1. the further transmission number is incorporated in the further response (202, 203).

**9.** The method according to any of the preceding claims, **characterized in that** the second security module (300) sends a regular response (301, 302, 303) upon each anti-collision query of the sequence of anti-collision queries, with the regular response (301, 302, 303) comprising a second identification number (ID2) of the second security module (300), and
the first and further responses (201, 202, 203) of the first security module (200) effectuate with the regular response (301, 302, 303) of the second security module (300) a collision at a collision location n and each anti-collision query has a collision information item.

**10.** The method according to claim 9, **characterized in that** the first security module (200), for forming each further transmission number, adapts said further transmission number to the collision location n of the preceding transmission number and/or negates it at the collision location n of the preceding transmission number.

**11.** The method according to any of claims 7 to 10, **characterized in that** the information to be transmitted covers parts of the first identification number (ID1).

**12.** The method according to claim 10 or 11, **characterized in that** the second security module (300) decodes the information to be transmitted from the bit length of the information, the bit length and the content of the second identification number (ID2) and a negation of the nth bit location of the second identification number (ID2).

**13.** The method according to any of the preceding claims, **characterized in that** the second security module (300) determines a part of the information to be transmitted from each of the sequence of anti-collision queries and forms the information to be transmitted after the end of the sequence of anti-collision queries.

**14.** A first security module (200) for transmitting information to be transmitted to a second security module (300) in a system that comprises the first and second security modules (200, 300) as well as
at least one communication device (100), wherein an anti-collision phase comprises a sequence of anti-collision queries of the communication device (100), and a communication phase follows the anti-collision phase, and wherein the first security module (200) transmits information to be transmitted to the second security module (300) in the anti-collision phase by sending responses of the first security module (200) to the sequence of anti-collision queries, comprising a memory unit (220), a transceiver unit (210) and a processing unit (230), wherein the processing unit (230) is configured for analyzing a query and creating a response, and the query is a query in the context of an anti-collision phase, **characterized in that** each of the responses is configured such that the contents of the sequence of subsequent anti-collision queries of the communication device (100) are influenced deterministically, wherein the information is contained in the responses in coded form.

**15.** The first security module according to claim 14, **characterized in that** the information to be transmitted is transmitted to the second security module (300) via an anti-collision protocol which is a known and used transmission protocol.

**16.** The first security module (200) according to claim 15, **characterized in that** the first security module (200) is configured for performing a method according to any of claims 3 to 11.

## Revendications

**1.** Procédé dans un système comprenant un premier et un deuxième module de sécurité (200, 300) ainsi qu'au moins un appareil de communication (100), cependant qu'une phase d'anticollision comprend une succession de demandes d'anticollision de l'appareil de communication (100) et une phase de communication fait suite à la phase d'anticollision ; le premier module de sécurité (200) transmet au deuxième module de sécurité (300) lors de la phase d'anticollision une information à transmettre, par émission de réponses du premier module de sécurité (200) à la succession de demandes d'anticollision, cependant que l'information à transmettre est codée dans les réponses du premier module de sécurité (200) ; et le deuxième module de sécurité (300) décode à partir de la succession de demandes d'anticollision reçues l'information à transférer, **caractérisé en ce que** les réponses du premier module de sécurité (200) sont configurées dynamiquement et le premier module de sécurité (200) influence de manière déterministe par le biais de chacune des réponses les contenus de la succession de demandes d'anticollision subséquentes.

**2.** Procédé selon la revendication 1, **caractérisé en ce que** l'information à transmettre est transmise par le premier module de sécurité (200) au deuxième module de sécurité (300) par le biais d'un protocole d'anticollision qui consiste en un protocole de transmission connu et utilisé.

**3.** Procédé selon une des revendications 1 ou 2, **caractérisé en ce que** le deuxième module de sécurité (300) mémorise après la réception de l'information transmise une information de sécurité.

**4.** Procédé selon une des revendications précédentes, **caractérisé en ce que** l'information à transmettre est un code de déblocage (FC).

**5.** Procédé selon la revendication 4, **caractérisé en ce que** le code de déblocage (FC) débloque le deuxième module de sécurité (300) pour la phase de communication.

**6.** Procédé selon une des revendications précédentes, **caractérisé en ce que** le premier et/ou le deuxième module de sécurité (200, 300) vérifie si un autre module de sécurité est présent dans leur environnement.

**7.** Procédé selon une des revendications précédentes, **caractérisé en ce que**, à une première demande d'anticollision (101) de la succession de demandes d'anticollision, la réponse du premier module de sécurité (200) est une première réponse (201), le premier module de sécurité (200) évalue la première demande d'anticollision (101), et en fonction du résultat de l'évaluation, pour le codage de l'information à transmettre dans la première réponse (201),

a1. l'information est transmise avec un premier numéro d'identification (ID1) du premier module de sécurité (200) à un premier numéro de transmission, et
b1. le numéro de transmission est intégré dans la première réponse (201).

**8.** Procédé selon la revendication 7, **caractérisé en ce que** le premier module de sécurité (200) reçoit dans la succession de demandes d'anticollision une autre demande d'anticollision (102, 103), évalue cette dernière et, en fonction du résultat de l'évaluation, dans une autre réponse,

c1. l'information à transmettre ayant le premier numéro d'identification (ID1) du premier module de sécurité (200) est codée à un autre numéro de transmission, et
d1. l'autre numéro de transmission est intégré dans l'autre réponse (202, 203).

**9.** Procédé selon une des revendications précédentes, **caractérisé en ce que** le deuxième module de sécurité (300) émet à chaque demande d'anticollision de la succession de demandes d'anticollision une réponse régulière (301, 302, 303), cependant que la réponse régulière (301, 302, 303) comprend un deuxième numéro d'identification (ID2) du deuxième module de sécurité (300), et la première et deuxième réponse (201, 202, 203) du premier module de sécurité (200) engendrent avec la réponse régulière (301, 302, 303) du deuxième module de sécurité (300) une collision à un emplacement de collision n, et chaque demande d'anticollision comporte une information de collision.

**10.** Procédé selon la revendication 10, **caractérisé en ce que** le premier module de sécurité (200), pour la constitution de chaque autre numéro de transmission, adapte à l'emplacement de collision n du numéro de transmission précédent cet autre numéro de transmission et/ou nie ce dernier à l'emplacement de collision n du numéro de transmission précédent.

**11.** Procédé selon une des revendications de 7 à 10, **caractérisé en ce que** l'information à transmettre recouvre des parties du premier numéro d'identification (ID1).

**12.** Procédé selon la revendication 10 ou 11, **caractérisé en ce que** le deuxième module de sécurité (300) décode l'information à transmettre à partir de la longueur de bits de l'information, de la longueur de bits et du contenu du deuxième numéro d'identification (ID2) et d'une négation du $n^{\text{ème}}$ emplacement de bit du deuxième numéro d'identification (ID2).

**13.** Procédé selon une des revendications précédentes, **caractérisé en ce que** le deuxième module de sécurité (300) détermine à partir de chacune des succession de demandes d'anticollision une partie de l'information à transmettre et constitue après achèvement de la succession de demandes d'anticollision l'information à transmettre.

**14.** Premier module de sécurité (200) destiné à la transmission, à un deuxième module de sécurité (300), d'une information à transmettre, dans un système qui comprend le premier et le deuxième module de sécurité (200, 300) ainsi qu'au moins un appareil de communication (100), cependant qu'une phase d'anticollision comprend une succession de demandes d'anticollision de l'appareil de communication (100) et une phase de communication fait suite à la phase d'anticollision, et cependant que le premier module de sécurité (200) transmet au deuxième module de sécurité (300) lors de la phase d'anticollision une information à transmettre, par émission de réponses du premier module de sécurité (200) à la succession de demandes d'anticollision, comprenant une unité de mémorisation (220), une unité d'émission/réception (210) et une unité de traitement (230), cependant que l'unité de traitement (230) est configurée pour l'analyse d'une demande et la génération d'une réponse, et la demande est une demande dans le cadre d'une phase d'anticollision, **caractérisé en ce que** chacune des réponses est configurée de manière à influencer de manière déterministe les contenus de la succession de demandes d'anticollision subséquentes de l'appareil de communication (100), cependant que, dans les réponses, l'information est contenue sous forme codée.

**15.** Premier module de sécurité selon la revendication 14, **caractérisé en ce que** l'information à transmettre est transmise au deuxième module de sécurité (300) par le biais d'un protocole d'anticollision qui consiste en un protocole de transmission connu et utilisé.

**16.** Premier module de sécurité (200) selon la revendication 15, **caractérisé en ce que** le premier module de sécurité (200) est configuré pour exécuter un procédé selon une des revendications de 3 à 11.

Fig. 1

Fig. 2

Fig. 3

ID2=10011010

Freigabecode FC=1110

| Schritt | 300 $ID_2$ | 200 $ID_1$ | 100 | |
|---|---|---|---|---|
| Q1 | | | -> IDs? | |
| Q2 | 1 0 0 1 1 0 1 0 | 1 0 0 0 X X X X | | |
| Q3 | | | Kollision col=3 | ⎫ |
| Q4 | | | -> IDs col=3? | ⎬ Anwesenheitserkennung |
| Q5 | col=3 | col=3 --> OK | | ⎭ |
| Q6 | 1 0 0 1 1 0 1 0 | 1 0 0 1 1 1 1 0 | | ⎫ |
| Q7 | | | Kollision col=5 | |
| Q8 | | | IDs col=5 | |
| Q9 | $FC_1$=11-- | | | ⎬ Ermittlung Freigabecode |
| Q10 | 1 0 0 1 1 0 1 0 | 1 0 0 1 1 0 1 0 | | |
| Q11 | | | keine Kollision; ID=10011010 | |
| Q12 | | | select 10011010 | ⎭ |
| Q13 | $FC_2$=--10 Freigabecode=1110 | | | |

## Fig. 4

ID1 — 221

Zwischenspeicher — 222

FC — 223

Anwesenheits info — 225

— 210

200 · 220 · 230

Fig. 5

ID2 — 321

Zwischenspeicher — 322

FC — 323

Freigabeinfo — 324

Anwesenheits info — 325

— 310

300 · 320 · 330

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040223481 A1